# EUROPEAN PATENT SPECIFICATION

(11) **EP 2 455 924 B1**
(45) Date of publication and mention of the grant of the patent: **02.04.2014**
(21) Application number: 10190492.8
(22) Date of filing: 09.11.2010
(51) Int. Cl.: G07F 15/00, B60L 11/18

(54) **Wireless provision of electricity metering data from an electricity charging event**
Drahtlose Bereitstellung von Elektrizitätsmessdaten aus einem Elektrizitätsladeereignis
Fourniture sans fil de données de mesure d'électricité à partir d'un événement de chargement d'électricité

(43) Date of publication of application: 23.05.2012
(73) Proprietor: TeliaSonera AB, 106 63 Stockholm (SE); Vattenfall Verkko Oy, 22901 Tampere (FI); Aidon Oy, 40100 Jyväskylä (FI)
(72) Inventor: Chrons, Timo, 40270 Palokka (FI); Nirhamo, Timo, 40950 Muurame (FI); Liuhala, Tapani, 37140 Nokia (FI); Myllymäki, Jorma, 33400 Tampere (FI); Sintonen, Jouni, 01680 Vantaa (FI)
(74) Representative: Papula Oy

(56) References cited:
- EP-A1- 1 995 109
- EP-A1- 2 199 143
- US-A1- 2009 174 365

## Description

### BACKGROUND OF THE INVENTION:

### Field of the Invention:

The invention relates generally to providing electricity metering data. In particular, the invention relates to wirelessly providing electricity metering data from a charging event.

### Description of the Related Art:

Electric vehicles, such as electric cars are becoming more and more common. An electric vehicle is a plug-in battery powered vehicle which is propelled by an electric motor. As used herein, the term "electric vehicle" comprises also hybrid electric vehicles, which combine an internal combustion engine and one or more electric motors.

While electric vehicles are environmentally friendly, give good acceleration and have generally acceptable top speed, they need batteries that are a fairly large fraction of the vehicle mass but still often give relatively low range between charges. Recharging can typically be performed in one of two ways: either by exchanging drained or nearly drained batteries with fully charged batteries, or by recharging the drained batteries. Usually, the latter option is as it is more economical.

Usually, recharging is performed from a power grid, e.g. at home or using a street or shop charging station. There are also public power outlets, e.g. in parking garages and at parking meters, such as those provided for use by block heaters.

US 2009/0174365 discloses a system for network-controlled charging of electric vehicles according to the features described in the preamble of claim 1.

However, there are some problems and inconveniences with billing for the electricity used in recharging the batteries, especially if the recharging is performed outside one's home. For example, one may have to pay with cash or credit card to the owner/maintainer of a public power outlet each time one recharges one's electric car. Yet, it would be significantly more convenient if the used electricity was added to one's electricity bill. Moreover, it would be even more convenient if the used electricity was added to one's electricity bill automatically, i.e. with no or as little as possible interaction or input required from the user.

Therefore, an object of the present invention is to alleviate the problems described above and to introduce a solution that allows providing electricity metering data from a charging of e.g. a battery or other device wirelessly and automatically via a service platform to a billing system of an electricity company so that the electricity company can then add the used electricity to the electricity bill of the user.

### SUMMARY OF THE INVENTION:

A first aspect of the present invention is an apparatus for wirelessly providing electricity metering data from an electricity charging event. The apparatus comprises a charging cable for charging electricity from a charging socket. The apparatus further comprises a near field communication tag reader for reading a charging socket identifier comprised in a near field communication tag associated with the charging socket. The apparatus further comprises an electricity meter for metering the amount of the charged electricity. The apparatus further comprises an identity module comprising a user identifier. The apparatus further comprises a wireless transmitter for wirelessly transmitting, to a service platform, charging data comprising the read socket identifier, the user identifier, and metering data comprising information about the metered amount of the charged electricity.

In an embodiment of the invention, the metering data further comprises information about at least one of: a start time of the charging, an end time of the charging, and duration of the charging.

In an embodiment of the invention, the identity module further comprises a service platform operator identifier, and the service platform operator identifier is further comprised in the charging data.

In an embodiment of the invention, the apparatus further comprises a memory unit for storing the read socket identifier and its associated metering data. The apparatus further comprises a battery for providing power.

In an embodiment of the invention, the apparatus further comprises a positioning unit for providing location information of the apparatus.

In an embodiment of the invention, the apparatus further comprises a wireless receiver for receiving control instructions; and a control unit for controlling the apparatus in response to the received control instructions.

A second aspect of the present invention is a system for wirelessly providing electricity metering data from an electricity charging event. The system comprises a charging socket comprising a near field communication tag comprising a charging socket identifier. The system further comprises the apparatus of the first aspect.

In an embodiment of the invention, the system further comprises a service platform comprising a first receiver for receiving the wirelessly transmitted charging data; a first identifying unit for identifying the user based on the received user identifier; and a first forwarder for forwarding user information, the received socket identifier and the received metering data.

In an embodiment of the invention, the system further comprises a first electricity company system platform comprising a second receiver for receiving the forwarded user information, socket identifier and metering data; a second identifying unit for identifying the charging socket based on the received socket identifier; and a first billing unit for generating first billing data based on the received user information, socket identifier and metering data.

In an embodiment of the invention, the first billing unit is configured to generate also second billing data based on the received user information, socket identifier and metering data.

In an embodiment of the invention, the first electricity company system platform belongs to a first electricity company, the system further comprises a second electricity company system platform belonging to a second electricity company, and the first electricity company system platform further comprises a second forwarder for forwarding the received user information, socket identifier and at least one of the metering data and the billing data to the second electricity company system platform in response to determining, based on the identifying of the charging socket, that the charging socket belongs to the second electricity company; and the second electricity company system platform comprises a second billing unit for generating second billing data based on the received user information, socket identifier and metering data.

In an embodiment of the invention, the system further comprises a transmitter for transmitting the control instructions to the apparatus.

A third aspect of the present invention is a method of wirelessly providing electricity metering data from an electricity charging event. The method comprises charging electricity from a charging socket with a charging cable comprised in an apparatus. The method further comprises reading, with a near field communication tag reader comprised in the apparatus, a charging socket identifier comprised in a near field communication tag associated with the charging socket. The method further comprises metering, with an electricity meter comprised in the apparatus, the amount of the charged electricity. The method further comprises wirelessly transmitting to a service platform, with a wireless transmitter comprised in the apparatus, charging data comprising the read socket identifier, the user identifier, and metering data comprising information about the metered amount of the charged electricity.

In an embodiment of the invention, the method further comprises receiving, with a first receiver comprised in a service platform, the wirelessly transmitted charging data. The method further comprises identifying, with a first identifying unit comprised in the service platform, the user based on the received user identifier. The method further comprises forwarding, with a first forwarder comprised in the service platform, user information, the received socket identifier and the received metering data.

In an embodiment of the invention, the method further comprises receiving, with a second receiver comprised in a first electricity company system platform, the forwarded user information, socket identifier and metering data. The method further comprises identifying, with a second identifying unit comprised in the first electricity company system platform, the charging socket based on the received socket identifier.

In an embodiment of the invention, the method further comprises generating, with a first billing unit comprised in the first electricity company system platform, first billing data based on the received user information, socket identifier and metering data.

In an embodiment of the invention, the method further comprises generating, with the first billing unit comprised in the first electricity company system platform, second billing data based on the received user information, socket identifier and metering data.

In an embodiment of the invention, the first electricity company system platform belongs to a first electricity company, a second electricity company system platform belongs to a second electricity company, and the method further comprises forwarding, with a second forwarder comprised in the first electricity company system platform, the received user information, socket identifier and the metering data to the second electricity company system platform in response to determining, based on the identifying of the charging socket, that the charging socket belongs to the second electricity company. The method further comprises generating, with a second billing unit comprised in the second electricity company system platform, second billing data based on the received user information, socket identifier and metering data.

The invention allows providing electricity metering data from an electricity charging event wirelessly and automatically via a service platform to a billing system of an electricity company so that the electricity company can then add the used electricity to the electricity bill of the user. Furthermore, the invention significantly reduces the amount of payment related interaction or input required from the user compared to e.g. conventional payment by cash or credit card. Naturally, an advantage of the invention is also that the user does not need to carry cash or credit cards with him/her in order to be able to recharge the batteries.

### BRIEF DESCRIPTION OF THE DRAWINGS:

The accompanying drawings, which are included to provide a further understanding of the invention and constitute a part of this specification, illustrate embodiments of the invention and together with the description help to explain the principles of the invention. In the drawings:
   **Fig 1** is a block diagram illustrating an apparatus according to an embodiment of the invention;
   **Fig 2** is a block diagram illustrating a system according to an embodiment of the invention;
   **Fig 3a** is a diagram illustrating a method according to an embodiment of the invention; and
   **Fig 3b** is a diagram illustrating a method according to another embodiment of the invention.

### DETAILED DESCRIPTION OF THE PREFERRED EMBODIMENTS:

Reference will now be made in detail to the embodiments of the invention, examples of which are illustrated in the accompanying drawings.

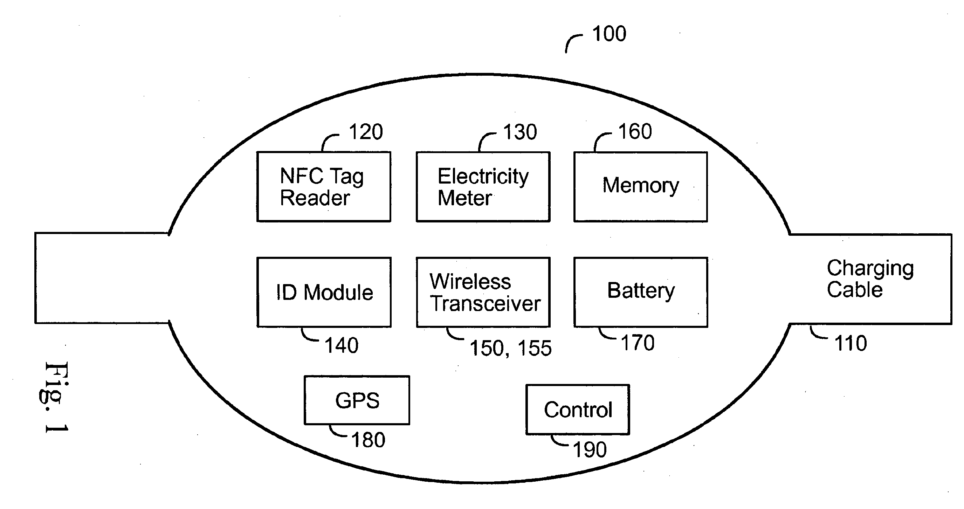

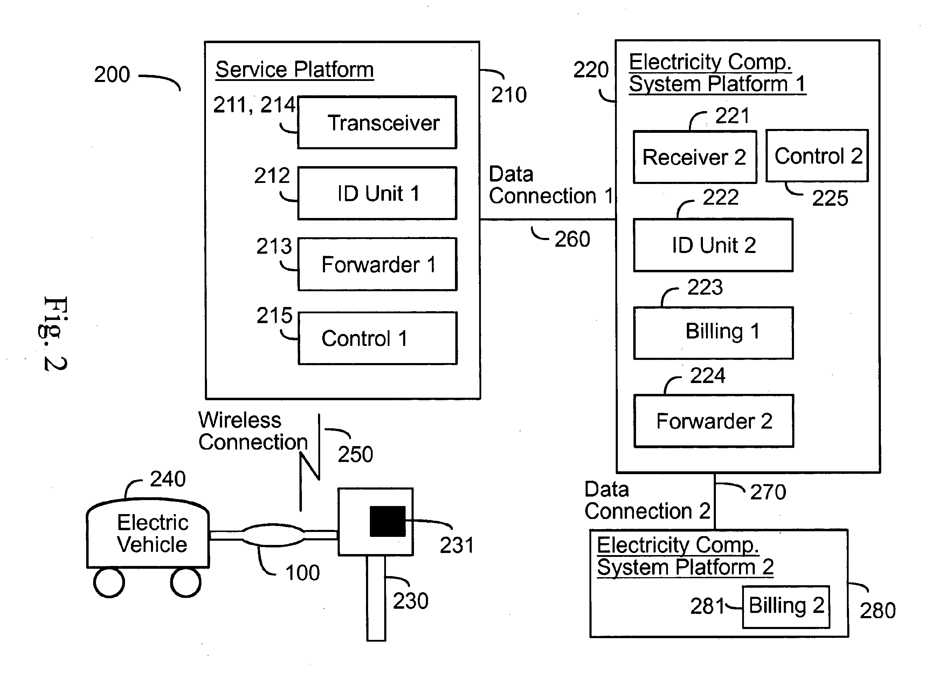

Figure 1 is a block diagram illustrating an apparatus 100 according to an embodiment of the invention. The apparatus 100 allows sending electricity metering data from an electricity charging event wirelessly and automatically. As detailed in connection with Figures 2-3b, the metering data (and certain identifier data detailed below) is then transmitted via a service platform to a billing system of an electricity company so that the electricity company can then add the used electricity to the electricity bill of the user, as well as deduct the charged electricity from the electricity bill of the owner of the charging socket.

The apparatus 100 for wirelessly providing electricity metering data from an electricity charging event comprises a charging cable 110 for charging electricity from a charging socket.

The apparatus 100 further comprises a near field communication (NFC) tag reader 120 for reading a charging socket identifier comprised in a near field communication tag associated with the charging socket. As is known in the art, Near Field Communication is a short-range wireless connectivity technology standard designed for intuitive, simple, and safe communication between electronic devices. The technology is an extension of the ISO/IEC 14443 proximity-card standard.

In an embodiment, the near field communication comprises radio-frequency identification. As is commonly known, the term "radio-frequency identification" refers to a technology that uses communication via electromagnetic waves to exchange data between a terminal and an object such as a product, animal, or person for the purpose of identification and tracking.

The charging socket identifier may be unique to its associated charging socket (or it may be shared at least partly by several charging sockets of a given electricity company): the function of the charging socket identifier is to indicate the associated electricity company so that billing data will be generated by the appropriate electricity company. The charging socket identifier may be e.g. a sequence of numbers and/or characters.

The apparatus 100 further comprises an electricity meter 130 for metering the amount of the charged electricity. In addition, the electricity meter 130 may determine at least one of: a start time of the charging, an end time of the charging, and duration of the charging.

The apparatus 100 further comprises an identity module 140 comprising a user identifier. The identity module 140 may further comprise a service platform operator identifier. The identity module 140 may comprise e.g. an identity module utilized in mobile telecommunications terminal devices, such as a subscriber identity module (SIM) or a universal subscriber identity module (USIM). The user identifier is an identifier that identifies the user/owner of the apparatus 100. The service platform operator identifier is an identifier that identifies the service platform operator which the user/owner of the apparatus 100 has subscribed to.

The apparatus 100 further comprises a wireless transmitter 150 for wirelessly transmitting charging data to the service platform. The charging data comprises the read socket identifier, the user identifier, and metering data. The metering data comprises information about the metered amount of the charged electricity. The charging data may further comprise the service platform operator identifier. The metering data may further comprise information about at least one of: a start time of the charging, an end time of the charging, and duration of the charging. The wireless transmitter 150 may utilize known mobile telecommunications technologies, such as e.g. Global System for Mobile Communications (GSM) technology, 3rd Generation Partnership Project (3GPP) technology, and code division multiple access (CDMA) technology including wideband code division multiple access (W-CDMA) technology and international mobile telecommunications-2000 (IMT-2000) technology. The wireless transmitter 150 may be implemented as e.g. a modem.

In an embodiment, the wireless transmitter 150 may be configured to transmit the charging data periodically in response to disconnecting the apparatus 100 from the charging socket 230, in response to returning to a service area of the service platform 210 of Figure 2 (when the apparatus was out of said service area e.g. before the charging data could be transmitted), and/or in response to the battery 170 being depleted after connecting the apparatus 100 to the charging socket 230. The transmission periods may be predetermined and/or modifiable.

The apparatus 100 may further comprise a memory unit 160 for storing the read socket identifier and its associated metering data. The apparatus may further comprise a battery 170 for providing power e.g. to the memory unit 160. The memory unit 160 and battery 170 may be useful e.g. in situations in which the connection to the service platform is down for some reason. In such a case, the read socket identifier and its associated metering data can be stored to the memory unit 160 and sent to the service platform later on when the connection is up again. In addition/alternatively, the battery 170 may be utilized e.g. in providing power for the transmitting of the charging data while the apparatus 100 is not connected to a charging socket 230. In an embodiment, the memory unit 160 may comprise non-volatile memory (e.g. flash memory).

The apparatus 100 may further comprise a positioning unit 180 for providing location information of the apparatus 100. The positioning unit 180 may comprise e.g. a Global Positioning System (GPS) unit. The positioning unit 180 may be used to provide location information of the apparatus 100 e.g. to a service platform 210 and/or an electricity company system platform 220, 280 of Figure 2. The provided location information of the apparatus 100 may be used e.g. to determine the charging location in order to allow preventing charging in a given location (e.g. in an unauthorized location) and/or to provide notification that the charging was performed in the given location.

In an embodiment of the invention, the apparatus further comprises a wireless receiver 155 for receiving control instructions; and a control unit 190 for controlling the apparatus in response to the received control instructions. The control instructions may comprise e.g. control instructions for preventing charging, such as in response to the above determined charging location being a location in which charging is not allowed. E.g. Short Message Service (SMS) message(s) may be employed in transferring the control instructions. Also, the control instructions may be used e.g. to postpone at least a portion of the charging to a later time, for example to a less congested time.

In an embodiment, the apparatus 100 may be implemented so that the NFC tag reader 120, the electricity meter 130, the identity module 140, the wireless transmitter 150, the wireless receiver 155, the memory unit 160, the battery 170, the positioning unit 180 and control unit 190 are arranged into the charging cable 110.

Figure 2 is a block diagram illustrating a system 200 for wirelessly providing electricity metering data from an electricity charging event according to an embodiment of the invention.

The system 200 comprises a charging socket 230. The charging socket 230 comprises a near field communication (NFC) tag 231. The NFC tag 231 comprises a charging socket identifier that may be unique to the charging socket 230.

The object to be charged with the electricity may comprise e.g. a battery/batteries comprised in an electric vehicle 240, such as an electric car, an electric moped, or the like. Alternatively, the object to be charged may comprise other electrically operable devices/apparatuses, such as electrically operable devices/apparatuses in a boat, in a caravan, in a truck, or the like. Therefore, it is to be understood that in the context of the present invention, the term "charging" refers to all drawing of electricity from a socket. While re-charging batteries, such as electric vehicle batteries, is contemplated to be one context of use for the present invention, nothing prevents the present invention from being used in connection with providing electricity to electrically operable devices/apparatuses.

The electric vehicle 240 is a plug-in battery powered vehicle which is propelled by an electric motor. As used herein, the term "electric vehicle" comprises also hybrid electric vehicles, which combine an internal combustion engine and one or more electric motors.

The system 200 further comprises the apparatus 100 of Figure 1. As described above in connection with Figure 1, the apparatus 100 is used to charge electricity, read charging socket identifier from the NFC tag 231, meter the charged electricity, and send the charging data to the service platform 210 over the mobile telecommunications connection 250. The charging data may be sent utilizing e.g. a data connection or Short Message Service (SMS) message(s).

In the embodiment of Figure 2, the system 200 further comprises a service platform 210. The service platform 210 comprises a first receiver 211 for receiving the wirelessly transmitted charging data; a first identifying unit 212 for identifying the user based on the received user identifier; and a first forwarder 213 for forwarding user information, the received socket identifier and the received metering data to a first electricity company system platform 220. In addition, the first identifying unit 212 may identify the associated service platform operator if a service platform operator identifier is received in the charging data. The service platform 210 may be operated and maintained e.g. by a service platform operator. The service platform 210 may be implemented e.g. in a server device. Furthermore, the service platform 210 may be implemented as part of a pre-existing service platform element, or it may be implemented as a new, separate service platform element.

In an embodiment, the service platform 210 may comprise a mobile telecommunications network unit. In an embodiment, the service platform operator may be a mobile telecommunications network operator. In an embodiment, the service platform operator identifier may be a mobile telecommunications network operator identifier.

In an embodiment, the first receiver 211 may check the received charging data, and, e.g. in response to detecting error(s), request the apparatus 100 to retransmit the charging data.

The user information forwarded by the first forwarder 213 may simply comprise the user identifier received from the apparatus 100. Alternatively, it may comprise user information based on the received user identifier and modified further to allow the first electricity company system platform 220 to identify the user.

In an embodiment, the first forwarder 213 may forward data as is, or convert at least a portion of it to another format before forwarding it.

In an embodiment, the service platform 210 further comprises a transmitter 214 for transmitting the above described control instructions to the apparatus 100. These control instructions may originate e.g. from a first control means 215 in the service platform 210, a second control means 225 in the first electricity company system platform 220, or from the second electricity company system platform 280. These control instructions may be transferred e.g. via an automated arrangement, SMS message(s), or a World Wide Web (WWW) based interface.

In an alternative embodiment, the transmitter 214 may be comprised in the first electricity company system platform 220 or in the second electricity company system platform 280 (not shown in Fig. 2). Again, the control instructions may be transferred e.g. via an automated arrangement, SMS message(s), or a World Wide Web (WWW) based interface. In this alternative embodiment, the control instructions may bypass the service platform 210.

The first forwarder 213 may forward the user information, the received socket identifier and the received metering data to the first electricity company system platform 220 over a first data connection 260 which may be e.g. a data connection based on Internet protocol (IP) technology. The first data connection 260 may be e.g. a push type data connection, or a pull type data connection. In an embodiment, transmissions over the first data connection 260 are acknowledged by the respective receiving party.

In the embodiment of Figure 2, the system 200 further comprises the first electricity company system platform 220. The first electricity company system platform 220 comprising a second receiver 221 for receiving the forwarded user information, socket identifier and metering data; a second identifying unit 222 for identifying the charging socket based on the received socket identifier; and a first billing unit 223 for generating first billing data based on the received user information, socket identifier and metering data. Optionally, the first billing unit 223 may generate also second billing data based on the received user information, socket identifier and metering data. The first billing data comprises adding the charged electricity (in kilowatt hours) for the owner of the apparatus 100 (e.g. in an electricity bill of the owner of the apparatus 100). The second billing data comprises deducting the charged electricity from the owner of the charging socket 230 (e.g. in the electricity bill of the owner of the charging socket 230).

In the embodiment of Figure 2, the first electricity company system platform 220 may be operated and maintained by a first electricity company. The first electricity company system platform 220 may be implemented e.g. in a server device. Furthermore, the first electricity company system platform 220 may be implemented as part of a pre-existing element of e.g. the billing system of the first electricity company, or it may be implemented as a new, separate element. The first electricity company may be e.g. a distribution system operator (DSO), electricity supplier or an external service provider. Also, the first electricity company is an electricity company which the owner of the apparatus 100 has an electricity contract with.

In the embodiment of Figure 2, the system 200 further comprises a second electricity company system platform 280 that belongs to a second electricity company. The first electricity company system platform 220 further comprises a second forwarder 224 for forwarding the received user information, socket identifier and the metering data to the second electricity company system platform in response to determining, based on the identifying of the charging socket 230, that the charging socket 230 belongs to the second electricity company.

The second electricity company system platform 280 comprises a second billing unit 281 for generating the second billing data based on the received user information, socket identifier and metering data

The second forwarder 224 may forward the received user information, socket identifier and metering data to the second electricity company system platform 280 over a second data connection 270 which may be e.g. a data connection based on Internet protocol (IP) technology.

The first billing unit 223 may bill the owner of the apparatus 100 for the charged electricity (e.g. in an electricity bill of the owner of the apparatus 100), and deduct the charged electricity from the electricity bill of the owner of the charging socket 230, if the first electricity company manages the charging socket 230. Alternatively, if the charging socket 230 is managed by the second electricity company, the second billing data is generated by second billing unit 281, i.e. the second electricity company deducts the charged electricity from the electricity bill of the owner of the charging socket 230 in this case.

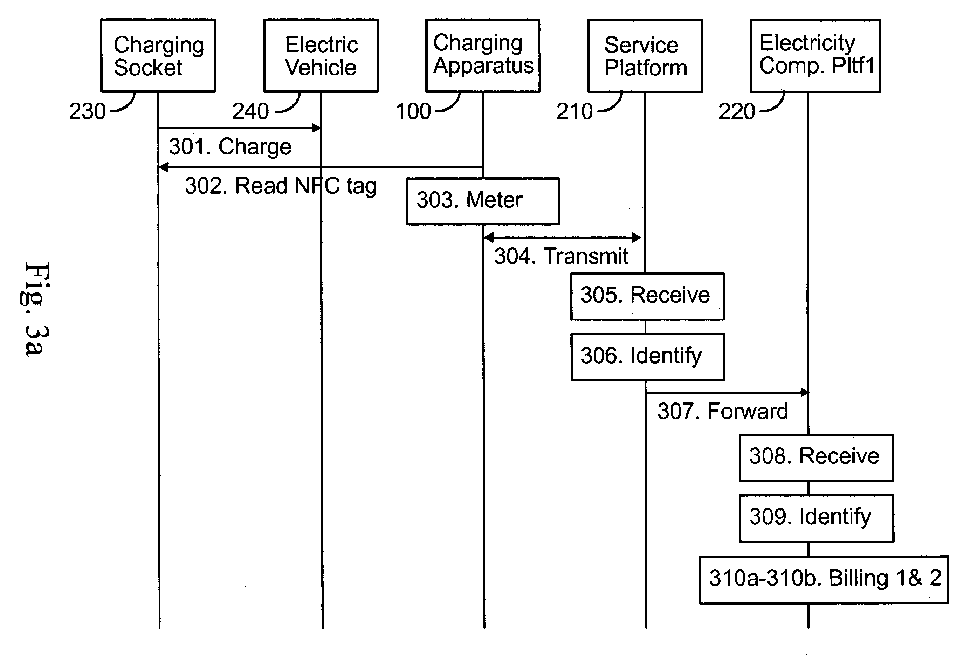

Figure 3a is a diagram illustrating a method of wirelessly providing electricity metering data for an electricity charging event according to an embodiment of the invention.

At step 301, the electricity is charged from the charging socket 230 with the charging cable 110 comprised in the apparatus 100. The charging socket identifier comprised in the NFC tag 231 associated with the charging socket 230 is read with the NFC tag reader 120 comprised in the apparatus 100, step 302.

At step 303, the amount of the charged electricity is metered with the electricity meter 130 comprised in the apparatus 100. The charging data comprising the read socket identifier, the user identifier, and the metering data comprising information about the metered amount of the charged electricity are wirelessly transmitted to the service platform with the wireless transmitter 150 comprised in the apparatus 100, step 304.

At step 305, the wirelessly transmitted charging data is received with the first receiver 211 comprised in the service platform 210. In an embodiment, the received charging data maybe checked, and, e.g. in response to detecting error(s), re-transmission of the charging data may be requested.

Based on the received user identifier, the user is identified with the first identifying unit 212 comprised in the service platform 210, step 306. User information, the received socket identifier and the received metering data are forwarded, with the first forwarder 213 comprised in the service platform 210, step 307. The data forwarded at step 307 may be forwarded as is, or at least a portion of it may be converted to another format before forwarding it.

At step 308, the forwarded user information, socket identifier and metering data are received with the second receiver 221 comprised in the first electricity company system platform 220. Based on the received socket identifier, the charging socket is identified with a second identifying unit 222 comprised in the first electricity company system platform 220, step 309.

At step 310a, first billing data is generated based on the received user information, socket identifier and metering data, using the first billing unit 223 comprised in the first electricity company system platform 220. The first billing data generated at step 310a comprises adding the charged electricity (in kilowatt hours) for the owner of the apparatus 100 (e.g. in an electricity bill of the owner of the apparatus 100). At step 310b, second billing data is generated based on the received user information, socket identifier and metering data, using the first billing unit 223 comprised in the first electricity company system platform 220. The second billing data comprises deducting the charged electricity from the owner of the charging socket 230 (e.g. in the electricity bill of the owner of the charging socket 230).

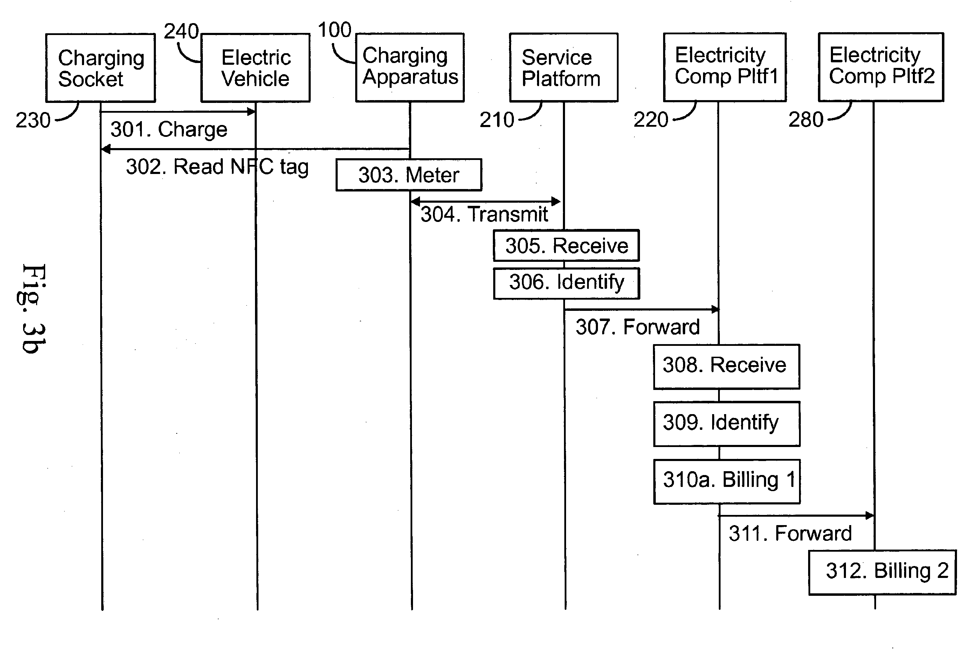

Figure 3b is a diagram illustrating a method of wirelessly providing electricity metering data for aa electricity charging event according to another embodiment of the invention.

Steps 301-310a in Figure 3b are similar to those in Figure 3a, and are therefore not described again here.

After identifying the charging socket at step 309, it is determined based on this identifying that the charging socket 230 is covered by the second electricity company instead of the first electricity company (to whom the first electricity company system platform 220 belongs). Therefore, the received user information, socket identifier and the metering data are forwarded with the second forwarder 224 comprised in the first electricity company system platform 220 to the second electricity company system platform 280 to allow the second electricity company to bill (i.e. deduct the charged electricity from) the owner of the charging socket 230. At step 312, second billing data is generated based on the received user information, socket identifier and metering data, with the second billing unit 281 comprised in the second electricity company system platform 280. The second billing data generated at step 312 comprises deducting the charged electricity from the owner of the charging socket 230 (e.g. in the electricity bill of the owner of the charging socket 230).

In other words, in the embodiment of Figure 3b, the first electricity company is an electricity company that bills the owner of the apparatus 100, and the second electricity company is an electricity company that bills (i.e. deducts the charged electricity from) the owner of the charging socket 230.

While the present inventions have been described in connection with a number of exemplary embodiments, and implementations, the present inventions are not so limited, but rather cover various modifications, and equivalent arrangements, which fall within the scope of the claims.

## Claims

1. An apparatus (100) for wirelessly providing electricity metering data from an electricity charging event, comprising:
a charging cable (110) for charging electricity from a charging socket;
**characterized in that** the apparatus (100) further comprises:
a near field communication tag reader (120) for reading a charging socket identifier comprised in a near field communication tag associated with the charging socket;
an electricity meter (130) for metering the amount of the charged electricity;
an identity module (140) comprising a user identifier; and
a wireless transmitter (150) for wirelessly transmitting, to a service platform, charging data comprising the read socket identifier, the user identifier, and metering data comprising information about the metered amount of the charged electricity.

2. The apparatus (100) according to claim 1, wherein the metering data further comprises information about at least one of: a start time of the charging, an end time of the charging, and duration of the charging.

3. The apparatus (100) according to claim 1 or 2, wherein the identity module further comprises a service platform operator identifier, and the service platform operator identifier is further comprised in the charging data.

4. The apparatus (100) according to any of the claims 1-3, further comprising:
a memory unit (160) for storing the read socket identifier and its associated metering data; and
a battery (170) for providing power.

5. The apparatus (100) according to any of the claims 1-4, further comprising:
a positioning unit (180) for providing location information of the apparatus (100).

6. The apparatus (100) according to any of the claims 1-5, further comprising:
a wireless receiver (155) for receiving control instructions; and
a control unit (190) for controlling the apparatus (100) in response to the received control instructions.

7. A system (200) for wirelessly providing electricity metering data from an electricity charging event, **characterized in** comprising:
a charging socket (230) comprising a near field communication tag (231) comprising a charging socket identifier; and
the apparatus (100) according to any one of the claims 1-6.

8. The system (200) according to claim 7, further comprising:
a service platform (210) comprising a first receiver (211) for receiving the wirelessly transmitted charging data; a first identifying unit (212) for identifying the user based on the received user identifier; and a first forwarder (213) for forwarding user information, the received socket identifier and the received metering data.

9. The system (200) according to claim 8, further comprising:
a first electricity company system platform (220) comprising a second receiver (221) for receiving the forwarded user information, socket identifier and metering data; a second identifying unit (222) for identifying the charging socket based on the received socket identifier; and a first billing unit (223) for generating first billing data based on the received user information, socket identifier and metering data.

10. The system (200) according to claim 9, wherein the first billing unit (223) is configured to generate also second billing data based on the received user information, socket identifier and metering data.

11. The system (200) according to claim 9, wherein the first electricity company system platform (220) belongs to a first electricity company, the system (200) further comprises a second electricity company system platform (280) belonging to a second electricity company, and the first electricity company system platform (220) further comprises:
a second forwarder (224) for forwarding the received user information, socket identifier and metering data to the second electricity company system platform (280) in response to determining, based on the identifying of the charging socket, that the charging socket belongs to the second electricity company; and the second electricity company system platform (280) comprises:
a second billing unit (281) for generating second billing data based on the received user information, socket identifier and metering data.

12. The system (200) according to any of the claims 7-11, wherein the system (200) further comprises:
a transmitter (214) for transmitting the control instructions to the apparatus (100).

13. A method of wirelessly providing electricity metering data from an electricity charging event, comprising:
charging (301) electricity from a charging socket with a charging cable comprised in an apparatus;
**characterized in that** the method further comprises:
reading (302), with a near field communication tag reader comprised in the apparatus, a charging socket identifier comprised in a near field communication tag associated with the charging socket;
metering (303), with an electricity meter comprised in the apparatus, the amount of the charged electricity; and
wirelessly transmitting (304) to a service platform, with a wireless transmitter comprised in the apparatus, charging data comprising the read socket identifier, the user identifier, and metering data comprising information about the metered amount of the charged electricity.

14. The method according to claim 13, further comprising:
receiving (305), with a first receiver comprised in a service platform, the wirelessly transmitted charging data;
identifying (306), with a first identifying unit comprised in the service platform, the user based on the received user identifier; and
forwarding (307), with a first forwarder comprised in the service platform, user information, the received socket identifier and the received metering data.

15. The method according to claim 14, further comprising:
receiving (308), with a second receiver comprised in a first electricity company system platform, the forwarded user information, socket identifier and metering data;
identifying (309), with a second identifying unit comprised in the first electricity company system platform, the charging socket based on the received socket identifier.

16. The method according to claim 15, further comprising:
generating (310a), with a first billing unit comprised in the first electricity company system platform, first billing data based on the received user information, socket identifier and metering data.

17. The method according to claim 16, further comprising:
generating (310b), with the first billing unit comprised in the first electricity company system platform, second billing data based on the received user information, socket identifier and metering data.

18. The method according to claim 16, wherein the first electricity company system platform belongs to a first electricity company, a second electricity company system platform belongs to a second electricity company, and the method further comprises:
forwarding (311), with a second forwarder comprised in the first electricity company system platform, the received user information, socket identifier and the metering data to the second electricity company system platform in response to determining, based on the identifying (309) of the charging socket, that the charging socket belongs to the second electricity company.

19. The method according to claim 18, further comprising:
generating (312), with a second billing unit comprised in the second electricity company system platform, second billing data based on the received user information, socket identifier and metering data.

## Patentansprüche

1. Vorrichtung (100) zum kabellosen Bereitstellen von Elektrizitätszähldaten von einem Elektrizitätsladevorgang umfassend;
ein Ladekabel (110) zum Laden von Elektrizität aus einer Ladedose;
**gekennzeichnet dadurch, dass** die Vorrichtung (100) ferner umfasst:
einen Nahfeldkommunikation-Tag-Leser (120) zum Auslesen eine Ladedosenkennung aus einem der Ladedose zugehörigem Nahfeldkommunikation-Tag;
einen Elektrizitätszähler (130) zum Zählen der Menge der geladenen Elektrizität;
ein Kennungsmodul (140), das eine Nutzerkennung umfasst; und
einen kabelloser Sender (150) zum kabellosen Senden der Ladedaten, die die ausgelesene Dosenkennung umfassen, der Nutzerkennung, und der Zähldaten, die Information über die gezählte Menge der geladenen Elektrizität umfassen, zu einer Serviceplattform.

2. Vorrichtung (100) gemäß Anspruch 1, wobei die Zähldaten ferner Information über wenigsten eines der folgenden umfasst: eine Startzeit der Ladung, eine Endzeit der Ladung, und eine Ladedauer.

3. Vorrichtung (100) gemäß Anspruch 1 oder 2, wobei das Kennungsmodul ferner eine Serviceplattformbetreiberkennung umfasst, und die Serviceplattformbetreiberkennung ferner in den Ladedaten enthalten ist.

4. Vorrichtung (100) gemäß einem der Ansprüche 1 bis 3, ferner umfassend:
eine Speichereinheit (160) zum Speichern der ausgelesenen Dosenkennung und deren zugehörigen Zähldaten; und
eine Batterie (170) zum Bereitstellen von Energie.

5. Vorrichtung (100) gemäß einem der Ansprüche 1 bis 4, ferner umfassend:
eine Ortungseinheit (180) zum Bereitstellen von Standortinformation der Vorrichtung (100).

6. Vorrichtung (100) gemäß einem der Ansprüche 1 bis 5, ferner umfassend:
einen kabellosen Empfänger (155) zum Empfangen von Steuerungsanweisungen; und
eine Steuerungseinheit (190) zum Steuern der Vorrichtung (100) in Antwort auf die empfangenen Steuerungsanweisungen.

7. System (200) zum kabellosen Bereitstellen von Elektrizitätszähldaten von einem Elektrizitätsladevorgang, **dadurch gekennzeichnet, dass** es folgendes umfasst:
eine Ladedose (230) mit einem Nahfeldkommunikation-Tag (231), das eine Ladedosenkennung umfasst; und
die Vorrichtung (100) gemäß einem der Ansprüche 1 bis 6.

8. System (200) gemäß Anspruch 7, ferner umfassend:
eine Serviceplattform (210) mit einen ersten Empfänger (211) zum Empfangen der kabellos gesendeten Ladedaten; eine erste Identifizierungseinheit (212) zum Identifizieren des Nutzers auf der Basis der empfangenen Nutzerkennung; und ein erster Weiterleiter (213) zum Weiterleiten der Nutzerdaten, der empfangenen Dosenkennung und der empfangenen Zähldaten.

9. System (200) gemäß Anspruch 8, ferner umfassend:
eine erste Elektrizitätsbetreibersystemplattform (220) mit einem zweiten Empfänger (221) zum Empfangen der weitergeleitenden Nutzerinformation, Dosenkennung und Zähldaten; eine zweite Identifizierungseinheit (222) zum Identifizieren der Ladedose auf Basis der der empfangenen Dosenkennung; und eine erste Abrechnungseinheit (223) zum Erstellen von ersten Abrechnungsdaten auf der Basis der empfangenen Nutzerinformation, Dosenkennung und Zähldaten.

10. System (200) gemäß Anspruch 9, wobei die erste Abrechungseinheit (223) auch zum Erstellen von zweiten Abrechnungsdaten auf Basis der empfangenen Nutzerinformation, Dosenkennung und Zähldaten eingerichtet ist.

11. System (200) gemäß Anspruch 9, wobei die erste Elektrizitätsbetreibersystemplattform (220) zu einem ersten Elektrizitätssystembetreiber gehört, das System (200) ferner eine zweite Elektrizitätsbetreibersystemplattform (280) umfasst, die zu einem zweiten Elektrizitätssystembetreiber gehört, und die erste Elektrizitätsbetreibersystemplattform (220) ferner umfasst:
einen zweiten Weiterleiter (224) zum Weiterleiten der empfangenen Nutzerinformation, Dosenkennung und Zähldaten an die zweite Elektrizitätsbetreibersystemplattform (280) in Antwort auf die Feststellung, auf Basis der Identifizierung der Ladedose, das die Ladedose zu dem zweiten Elektrizitätssystembetreiber gehört; und die zweite Elektrizitätsbetreibersystemplattform (280) umfasst:
eine zweite Abrechungseinheit (281) zum Erstellen von zweiten Abrechnungsdatenauf Basis der empfangenen Nutzerinformation, Dosenkennung und Zähldaten.

12. System (200) gemäß einem der Ansprüche 7-11, wobei das System (200) ferner umfasst:
einen Sender (214) zum Senden der Steuerungsanweisungen an die Vorrichtung (100).

13. Verfahren zum kabellosen Bereitstellen von Elektrizitätszähldaten von einem Elektrizitätsladevorgang, umfassend:
Laden (301) von Elektrizität aus einer Ladedose mit einem in einer Vorrichtung enthaltenen Ladekabel;
**dadurch gekennzeichnet, dass** das Verfahren ferner umfasst:
Lesen (302) einer Ladedosenkennung, die in einem der Ladedose zugehörigen Nahfeldkommunikation-Tag enthalten ist, mit einem in der Vorrichtung enthaltenen Nahfeldkommunikation-Tag-Leser;
Zählen (303) der Menge der geladenen Elektrizität mit einem in der Vorrichtung enthaltenen Elektrizitätszähler; und
kabelloses Senden (304) kabellosen Senden der Ladedaten, die die ausgelesene Dosenkennung umfassen, der Nutzerkennung, und der Zähldaten, die Information über die gezählte Menge der geladenen Elektrizität umfassen, zu einer Serviceplattform, mit einem in der Vorrichtung enthaltenen kabellosen Sender.

14. Verfahren gemäß Anspruch 13, ferner umfassend:
Empfangen (305) der kabellos gesendeten Ladedaten mit einem ersten in der Serviceplattform enthaltenem Empfänger;
Identifizieren (306) des Nutzers auf Basis der empfangenen Nutzerkennung mit einer ersten in der Serviceplattform enthaltenen Identifizierungseinheit; und
Weiterleiten (307) der Nutzerinformation, der empfangenen Dosenkennung und der empfangenen Zähldaten mit einem ersten in der Serviceplattform enthaltenen Weiterleiter.

15. Verfahren gemäß Anspruch 14, ferner umfassend:
Empfangen (308) der weitergeleiteten Nutzerinformation, Dosenkennung und Zähldaten mit einem zweiten in einer ersten Elektrizitätsbetreibersystemplattform enthaltenden Empfänger.
Identifizieren (309) der Ladedosenkennung auf Basis der empfangenen Dosenkennung mit einer zweiten in der ersten Elektrizitätsbetreibersystemplattform enthaltenen Identifizierungseinheit.

16. Verfahren gemäß Anspruch 15, ferner umfassend:
Erstellen (310a) von ersten Abrechungsdaten auf Basis der empfangenen Nutzerinformation, Dosenkennung und Zähldaten mit einer ersten in der ersten Elektrizitätsbetreiberserviceplattform enthaltenen Abrechnungseinheit.

17. Verfahren gemäß Anspruch 16, ferner umfassend:
Erstellen (310b) von zweiten Abrechungsdaten auf Basis der empfangenen Nutzerinformation, Dosenkennung und Zähldaten mit der ersten in der ersten Elektrizitätsbetreiberserviceplattform enthalten Abrechnungseinheit.

18. Verfahren gemäß Anspruch 16, wobei die erste Elektrizitätsbetreibersystemplattform zu einem ersten Elektrizitätssystembetreiber gehört, eine zweite Elektrizitätsbetreibersystemplattform zu einem zweiten Elektrizitätssystembetreiber gehört, und das Verfahren ferner umfasst:
Weiterleiten (311), mit einem zweiten in der ersten Elektrizitätsbetreibersystemplattform enthaltenen Weiterleiter, von empfangenen Nutzerinformation, Dosenkennung und der Zähldaten an die zweite Elektrizitätsbetreibersystemplattform als Antwort auf die Feststellung, auf Basis der Identifizierung (309) der Ladedose, dass die Ladedose zu dem zweiten Elektrizitätssystembetreiber gehört.

19. Verfahren gemäß Anspruch 18, ferner umfassend:
Erstellen (312) von zweiten Abrechnungsdaten auf Basis der empfangenen Nutzerinformation, Dosenkennung und Zähldaten mit einer zweiten in der zweiten Elektrizitätsbetreibersystemplattform enthaltenen.

## Revendications

1. Appareil (100) pour fournir sans fil des données de mesure d'électricité à partir d'un événement de chargement d'électricité, comprenant :
un câble de recharge (110) pour charger de l'électricité à partir d'une prise de recharge ;
**caractérisé en ce que** l'appareil (100) comprend en outre :
un lecteur d'étiquette à communication en champ proche (120) pour lire un identifiant de prise de recharge compris dans une étiquette à communication en champ proche associée à la prise de recharge ;
un compteur d'électricité (130) pour mesurer la quantité d'électricité chargée ;
un module d'identité (140) comprenant un identifiant d'utilisateur ; et
un émetteur sans fil (150) pour émettre sans fil, à une plate-forme de service, des données de recharge comprenant l'identifiant de prise de recharge lu, l'identifiant d'utilisateur, et des données de mesure comprenant des informations concernant la quantité d'électricité chargée mesurée.

2. Appareil (100) selon la revendication 1, dans lequel les données de mesure comprennent en outre des informations concernant au moins l'un des éléments suivants : une heure de début de la recharge, une heure de fin de la recharge, et une durée de la recharge.

3. Appareil (100) selon la revendication 1 ou 2, dans lequel le module d'identification comprend en outre un identifiant d'exploitant de plateforme de service, et l'identifiant d'exploitant de la plate-forme de service est en outre compris dans les données de recharge.

4. Appareil (100) selon l'une quelconque des revendications 1 à 3, comprenant en outre :
une unité de mémoire (160) pour stocker l'identifiant de prise de recharge lu et
ses données de mesure associées ; et
une batterie (170) pour fournir de l'énergie.

5. Appareil (100) selon l'une quelconque des revendications 1 à 4, comprenant en outre :
une unité de localisation (180) pour fournir des informations de localisation de l'appareil (100).

6. Appareil (100) selon l'une quelconque des revendications 1 à 5, comprenant en outre :
un récepteur sans fil (155) pour recevoir des instructions de commande ; et
une unité de commande (190) pour commander l'appareil (100) en réponse aux instructions de commande reçues.

7. Système (200) pour fournir sans fil des données de mesure d'électricité à partir d'un événement de chargement d'électricité, **caractérisé en ce qu'**il comprend :
une prise de recharge (230) comprenant une étiquette à communication en champ proche (231) comprenant un identifiant de prise de recharge ; et
l'appareil (100) selon l'une quelconque des revendications 1 à 6.

8. Système (200) selon la revendication 7, comprenant en outre :
une plate-forme de service (210) comprenant un premier récepteur (211) pour recevoir les données de facturation transmises sans fil ; une première unité d'identification (212) pour identifier l'utilisateur sur la base de l'identifiant d'utilisateur reçu ; et un premier redirecteur (213) pour transmettre des informations d'utilisateur, l'identifiant de prise de recharge reçu et les données de mesure reçues.

9. Système (200) selon la revendication 8, comprenant en outre :
une première plate-forme de réseau de compagnie de fourniture d'électricité (220) comprenant un second récepteur (221) pour recevoir les informations d'utilisateur transmises, l'identifiant de prise de recharge et les données de mesure ; une seconde unité d'identification (222) destinée à identifier la prise de recharge sur la base de l'identifiant de prise de recharge reçu ; et une première unité de facturation (223) destinée à générer des premières données de facturation sur la base des informations d'utilisateur reçues, de l'identifiant de la prise de recharge et des données de mesure.

10. Système (200) selon la revendication 9, dans lequel la première unité de facturation (223) est configurée pour générer également des secondes données de facturation sur la base des informations d'utilisateur reçues, de l'identifiant de la prise de recharge et des données de mesure.

11. Système (200) selon la revendication 9, dans lequel la première plate-forme de réseau de compagnie de fourniture d'électricité (220) appartient à une première compagnie de fourniture d'électricité, le système (200) comprend en outre une seconde plate-forme de réseau de compagnie de fourniture d'électricité (280) appartenant à une seconde compagnie de fourniture d'électricité, et la première plate-forme de réseau de compagnie de fourniture d'électricité (220) comprend en outre :
un second transmetteur (224) pour transmettre les informations d'utilisateur reçues, l'identifiant de prise de recharge et les données de mesure à la seconde plate-forme de réseau de compagnie de fourniture d'électricité (280) en réponse à la détermination, sur la base de l'identification de la prise de recharge, du fait que la prise de recharge appartient à la seconde compagnie de fourniture d'électricité ; et la seconde plate-forme de réseau de la compagnie de fourniture d'électricité (280) comprend :
une seconde unité de facturation (281) pour générer des secondes données de facturation sur la base des informations d'utilisateur reçues, de l'identifiant de prise de recharge et des données de mesure.

12. Système (200) selon l'une quelconque des revendications 7 à 11, dans lequel le système (200) comprend en outre :
un émetteur (214) pour transmettre les instructions de commande à l'appareil (100).

13. Procédé de fourniture sans fil de données de mesure d'électricité à partir d'un événement de chargement d'électricité, comprenant l'étape consistant à :
charger (301) de l'électricité à partir d'une prise de recharge avec un câble de recharge compris dans un appareil ;
**caractérisé en ce que** le procédé comprend en outre les étapes consistant à :
lire (302), avec un lecteur d'étiquette à communication en champ proche compris dans l'appareil, un identifiant de prise de recharge compris dans une étiquette à communication en champ proche associée à la prise de recharge ;
mesurer (303), avec un compteur d'électricité compris dans l'appareil, la quantité d'électricité chargée ; et
transmettre (304) sans fil à une plateforme de service, avec un émetteur sans fil compris dans l'appareil, des données de facturation comprenant l'identifiant de prise de recharge lu, l'identifiant d'utilisateur, et les données de mesure comprenant des informations concernant la quantité d'électricité chargée mesurée.

14. Procédé selon la revendication 13, comprenant en outre les étapes consistant à :
recevoir (305), avec un premier récepteur compris dans une plate-forme de service, les données de recharge transmise sans fil ;
identifier (306), avec une première unité d'identification comprise dans la plate-forme de service, l'utilisateur sur la base de l'identifiant d'utilisateur reçu ; et
transmettre (307), avec un premier transmetteur compris dans la plate-forme de service, les informations d'utilisateur, l'identifiant de prise de recharge reçues et les données de mesure reçues.

15. Procédé selon la revendication 14, comprenant en outre les étapes consistant à :
recevoir (308), avec un second récepteur compris dans une première plate-forme de réseau de compagnie de fourniture d'électricité, les informations d'utilisateur transmises, l'identifiant de prise de recharge et les données de mesure ;
identifier (309), avec une seconde unité d'identification comprise dans la première plate-forme de réseau de compagnie de fourniture d'électricité, la prise de recharge sur la base de l'identifiant de prise de recharge reçu.

16. Procédé selon la revendication 15, comprenant en outre l'étape consistant à :
générer (310a), avec une première unité de facturation comprise dans la première plate-forme de réseau de compagnie de fourniture d'électricité, des premières données de facturation sur la base des informations d'utilisateur reçues, de l'identifiant de prise de recharge et des données de mesure.

17. Procédé selon la revendication 16, comprenant en outre l'étape consistant à :
générer (310b), avec la première unité de facturation comprise dans la première plate-forme de réseau de la compagnie de fourniture d'électricité, des secondes données de facturation sur la base des informations d'utilisateur reçues, de l'identifiant de prise de recharge et des données de mesure.

18. Procédé selon la revendication 16, dans lequel la première plate-forme de réseau de compagnie de fourniture d'électricité appartient à une première compagnie de fourniture d'électricité, une seconde plate-forme de réseau de compagnie de fourniture d'électricité appartient à une seconde compagnie de fourniture d'électricité, et le procédé comprend en outre l'étape consistant à :
transmettre (311), avec un second transmetteur compris dans la première plate-forme de réseau de compagnie de fourniture d'électricité, les informations d'utilisateur reçues, l'identifiant de prise de recharge et les données de mesure pour la seconde plate-forme de réseau de compagnie de fourniture d'électricité en réponse à la détermination, sur la base de l'identifiant (309) de la prise de recharge, du fait que la prise de recharge appartient à la seconde compagnie de fourniture d'électricité.

19. Procédé selon la revendication 18, comprenant en outre l'étape consistant à :
générer (312), avec une seconde unité de facturation comprise dans la seconde plate-forme de réseau de compagnie de fourniture d'électricité, des secondes données de facturation sur la base des informations d'utilisateur reçues, de l'identifiant de prise de recharge et des données de mesure.
